Europäisches Patentamt

European Patent Office

Office européen des brevets

(11) Veröffentlichungsnummer : **0 144 357**
**B1**

(12) EUROPÄISCHE PATENTSCHRIFT

(45) Veröffentlichungstag der Patentschrift :
06.05.87

(51) Int. Cl.⁴ : **E 04 C   2/22**, E 04 G   1/15

(21) Anmeldenummer : 84901950.0

(22) Anmeldetag : 14.05.84

(86) Internationale Anmeldenummer :
PCT/CH 84/00075

(87) Internationale Veröffentlichungsnummer :
WO/8404940 (20.12.84 Gazette 84/30)

(54) BAUELEMENT, VERFAHREN ZU DESSEN HERSTELLUNG UND VERWENDUNG DES BAUELEMENTS.

(30) Priorität : 10.06.83 CH 3159/83

(43) Veröffentlichungstag der Anmeldung :
19.06.85 Patentblatt 85/25

(45) Bekanntmachung des Hinweises auf die Patenterteilung : 06.05.87 Patentblatt 87/19

(84) Benannte Vertragsstaaten :
AT DE FR SE

(56) Entgegenhaltungen :
DE-A- 1 951 310
DE-A- 2 039 323

(73) Patentinhaber : FAHRZEUGBAU & KUNSTSTOF-
FWERK HALLER AG
Luzernstrasse 71
CH-4950 Huttwil (CH)

(72) Erfinder : MÜLLER, Bruno
Schweinbrunnen
CH-4953 Schwarzenbach (CH)
Erfinder : AREGGER, Kurt
Schweinbrunnen
CH-4953 Schwarzenbach (CH)

(74) Vertreter : Keller, René, Dr. et al
Patentanwälte Hartmut Keller, Dr. René Keller Postfach 12
CH-3000 Bern 7 (CH)

## Beschreibung

Die Erfindung betrifft ein Bauelement gemäss dem Oberbegriff des Patentanspruchs 1, ein Verfahren zu dessen Herstellung und eine Verwendung des Bauelements.

Ein Bauelement dieser Art ist aus der DE-A-2 039 323 bekannt. Es besteht aus einer Lage aneinander gereihter Aufbauhilfskörper aus Urethanschaum, deren jeder mit einem kunstharzgetränkten Glasfasergewebe umwickelt ist, und einer die ganze Lage überdeckenden Deckplatte aus einem mit Kunstharz imprägnierten Glasfaserschichtstoff. Der äussere Endteil des jeweils einen Hilfskörper umwickelnden Glasfasergewebes erstreckt sich über seinen Hilfskörper hinaus und greift zwischen die Umwicklung des benachbarten Hilfskörpers und die Deckplatte.

Das Bauelement wird wie folgt hergestellt : Die quaderförmigen Hilfskörper werden durch je ein harzgetränktes Glasfasergewebe anderthalb Mal umwickelt, wobei die Länge des Gewebes grösser als das Anderthalbfache des Quaderumfangs bemessen wird, so dass der aussenliegende Endteil des Gewebes über den Hilfskörper hinausragt. Die Hilfskörper werden unmittelbar nebeneinander gelegt, so dass die sie umwickelnden Gewebebahnen einander berühren und dadurch glasfaserverstärkte Kunststoffrippen zwischen den Hilfskörpern gebildet werden. Der äussere Endteil der Gewebebahn wird auf die den benachbarten Hilfskörper umwickelnde Gewebebahn gelegt. Anschliessend wird die Deckplatte auf die Lage der aneinandergereihten Hilfskörper gelegt, wobei sie auf die die benachbarten Hilfskörper überlappenden Endteile der Gewebebahnen zu liegen kommt. Der so gebildete Bauteil wird dann ausgehärtet, so dass die verschiedenen Lagen ineinander übergehen und eine einheitliche Struktur bilden.

Der Erfindung liegt die Aufgabe zugrunde, ein leichtes und trotzdem biegesteifes Bauelement zu schaffen, das möglichst einfach und billig herstellbar ist.

Die erfindungsgemässe Lösung dieser Aufgabe ist Gegenstand der Patentansprüche 1 und 6 ; bevorzugte Ausführungsarten der Erfindung und die erfindungsgemässe Verwendung des Bauelements als Gerüstplatte sind Gegenstand der Patentansprüche 2 bis 5, 7, 8 und 9.

Im folgenden wird anhand der Zeichnung ein Ausführungsbeispiel der Erfindung näher erläutert.

Es zeigen :

Figur 1 eine Draufsicht auf eine Bauelementplatte,

Figur 2 einen Querschnitt durch die Bauelementplatte nach der Linie II-II in Fig. 1.

Figuren 3a bis 3f Verfahrensschritte bei der Herstellung einer Bauelementplatte und

Figur 4 einen Schnitt nach der Linie IV-IV in Fig. 3d.

Die in der Zeichnung dargestellte Bauelementplatte ist für die erfindungsgemässe Verwendung als Gerüstplatte bzw. Gerüstbrett bestimmt. Sie hat eine glasfaserverstärkte Kunststoffschale 1, die eine Lage aus vier aneinandergereihten Aufbauhilfskörpern 2-5 umschliesst. Die Hilfskörper 2-5 sind stabförmige, im Querschnitt rechteckige Schaumstoffkörper, welche die weiter unten beschriebene Herstellung der Bauelementplatte ermöglichen, in der fertigen Bauelementplatte aber keinerlei Funktion, insbesondere keinerlei Stützwirkung mehr haben. Für die Stützung und Versteifung der Schale 1 sind zwischen den Hilfskörpern 2-5 drei glasfaserverstärkte Kunststoffrippen 7-9 angeordnet. Die Glasfaserverstärkung jeder der Rippen 7-9 ist durch den Steg 11 einer Z-förmig gebogenen Glasfaser-Gewebebahn gebildet, deren Flansche 12, 13 zwischen die Hilfskörper 2-5 und die Glasfaserverstärkung der Schale 1 greifen und mit dieser in dasselbe Kunststoffmaterial eingebettet sind.

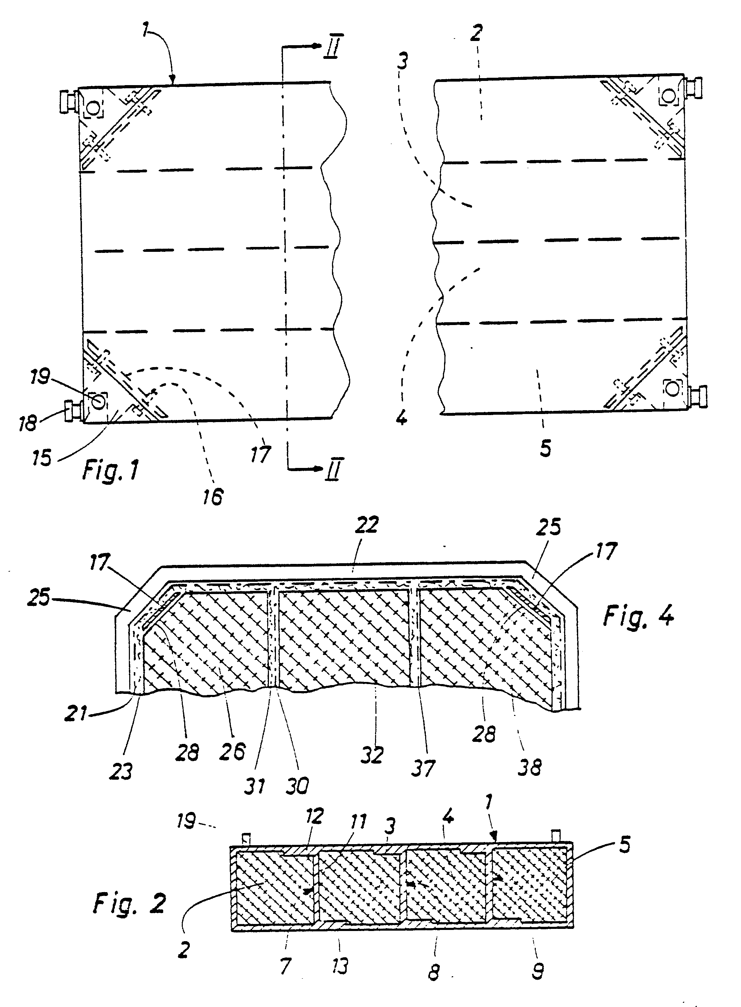

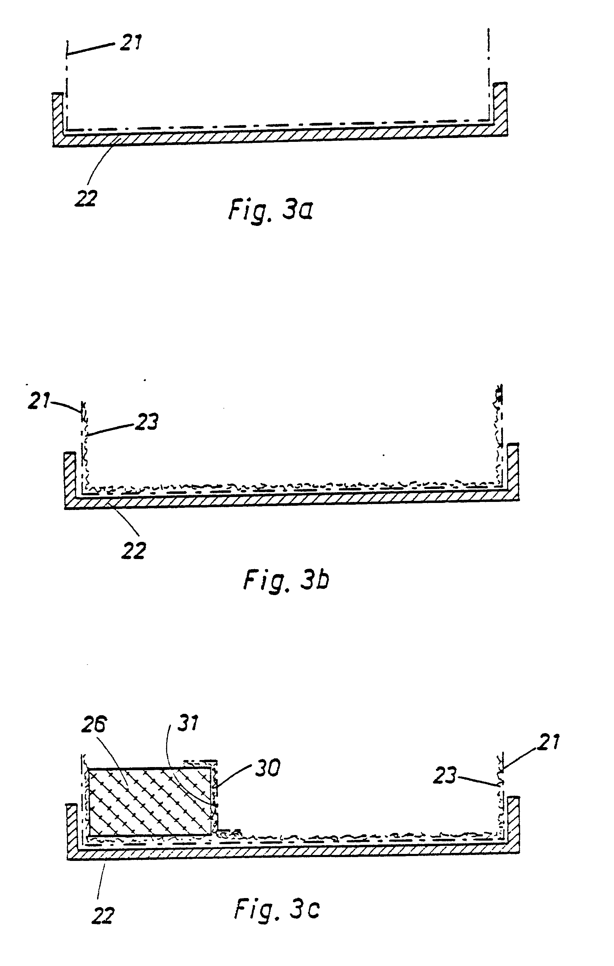

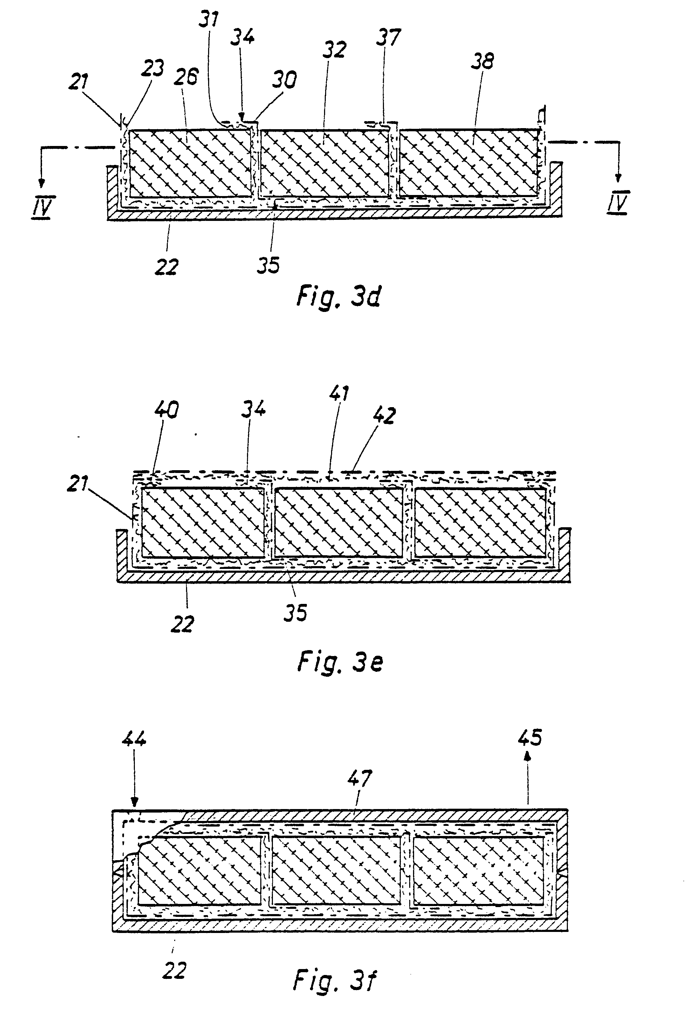

Sowohl die Schale 1 als auch die Rippen 7-9 bestehen aus durch ein Roving-Gewebe verstärktem Polyesterharz. Durch das Roving-Gewebe wird eine besonders hohe Festigkeit und Biegesteifigkeit erreicht, weil sich die Glasfaserstränge (Rovings) in zwei zueinander senkrechten Richtungen über das ganze Gewebe erstrecken. Die Ecken der Bauelementplatte sind mit Metallbeschlägen 15 versehen, die eine auf der entsprechend abgeschrägten Eckfläche der Kunststoffschale 1 liegende Basisfläche haben und durch Schrauben 16 mit zwischen dem Roving-Gewebe der Schale 1 und den ebenfalls abgeschrägten Enden der Hilfskörper 2 und 5 angeordneten Ankerplatten 18 verbunden sind. Die Metallbeschläge 15 haben seitlich vorstehende Kopfbolzen 18, mit denen sie an Verbindungsstücken des Gerüsts eingehängt werden können. Um die Bauelementplatten beim Stapeln gegen Verrutschen zu sichern, haben die Beschläge 15 ferner nach oben ragende Bolzen 19 und an der Unterseite entsprechende Löcher. Weitere Einzelheiten der in Fig. 1 und 2 dargestellten Gerüsttafeln ergeben sich aus dem im folgenden anhand von Fig. 3 und 4 beschriebenen Herstellungsverfahren, wobei aus Gründen einer einfacheren Darstellung die Herstellung mit lediglich drei Aufbauhilfskörpern beschrieben wird.

In einem ersten Verfahrensschritt wird gemäss Fig. 3a der schalenförmige Unterteil 22 einer zweiteiligen Hohlform mit einem strichpunktiert dargestellten Roving-Gewebe 21 ausgelegt, das die Hohlform überragt. Danach wird das Gewebe 21 mit einem Glasfaservlies 23 bedeckt (Fig. 3b). Anschliessend an diesen oder den in Fig. 3d gezeigten Verfahrensschritt werden die Ankerplatten 17 an den abgeschrägten Eckflächen 25 der Form 22 an das Vlies 23 gestellt (Fig. 4). Dann wird ein erster im Querschnitt rechteckiger, stabförmiger Aufbauhilfskörper 26 aus geschlossenzelligem Schaumstoff an den in Fig. 3 und 4 linken, aufstehenden Randbereich des Vlieses 23 gelegt. Die Enden des Hilfskörpers 26 sowie des später zu verlegenden Hilfskörpers 38 haben den abgeschrägten Eckflächen 25 der Form 22 angepasste Schrägflächen 28, welche die Ankerplatten 17 abstützen (Fig. 4).

Bei den in Fig. 3c und 3d dargestellten Verfahrensschritten wird eine Roving-Gewebebahn 30 zusammen mit einer Glasfaservliesbahn 31 Z-förmig an den Hilfskörper 26 gelegt (Fig. 3c) und ein zweiter Hilfskörper 32 daran angelegt (Fig. 3d), so dass der eine Längsrand 34 der Bahn (Flansch des Z-Profils) über den Hilfskörper 26 und der andere Längsrand 35 der Bahn unter den Hilfskörper 32 greift. Danach wird eine zweite Roving-Gewebebahn 37 mit einer Faservliesbahn Z-förmig an den Hilfskörper 32 gelegt und zwischen diesen und die in Fig. 3 und 4 rechte Formwand ein weiterer Hilfskörper 37 eingefügt, der an den Enden die Ankerplatten 17 stützende Schrägflächen 28 aufweist. Die über die Hilfskörper 26, 32 und 38 vorstehenden Ränder 40 des Roving-Gewebes 21 und Faservlieses 23 werden um die Hilfskörper gelegt und mit einem über die Hilfskörperlage 26, 32, 38 gelegten Faservlies 41 abgedeckt, auf das ein Roving-Gewebe 42 gelegt wird.

Nun wird die Hohlform mit deren oberen Teil 47 geschlossen, evakuiert und UV-beständiges Polyester-Giessharz in die Form gepresst. Die durch einen Pfeil 44 angedeutete Harzzufuhr erfolgt an der in Fig. 3f linken, vorderen Ecker der Form, die durch einen Pfeil 45 angedeutete Evakuation an der diagonal gegenüberliegenden Ecke. Die Faservliese 23, 31, 41 gewährleisten dabei, dass das Harz zuverlässig über die gesamte Fläche der Roving-Gewebe 21, 30, 42 fliesst und diese vollständig durchtränkt. Dabei werden die Roving-Gewebe und Faservliese 21, 23, 41, 42 der Schale und die Längsränder 34, 35 (Flansche der Z-Profile) der die Rippen verstärkenden Bahnen 30, 31, 37 in gemeinsame Kunststoffharzschichten eingebettet, die zusammen einen Kunstharzhohlkörper bilden, in dessen Hohlräumen die Hilfskörper 26, 32, 38 sitzen. Die horizontale Innenwand des oberen Hohlformteils 47 weist Rillen auf, so dass die Harzoberfläche dort eine geriffelte Struktur erhält, die gegen ein Ausgleiten der die Gerüstplatte begehenden Person schützt. Nach dem Aushärten des Harzes und Oeffnen der Hohlform 22, 47 werden die Metallbeschläge 15 (Fig. 1) mittels der Schrauben 16 an den abgeschrägten Eckflächen der Kunstharzschale befestigt, wobei die Schrauben in die an der Innenseite der Glasfaserverstärkung 21 angeordneten Ankerplatten 17 geschraubt werden. Damit ist die Gerüstplatte fertiggestellt.

Wenn das erste Glasfasergewebe 21 genügend lang bemessen ist, können seine Ränder 40 auch über den Hilfskörpern 26, 32, 38 aufeinander gelegt werden. In diesem Fall erübrigt sich das dritte Glasfasergewebe 42.

Erfindungsgemäss wird das Bauelement als Gerüstplatte verwendet. Für diese Verwendung ist das in Fig. 1 und 2 dargestellte, gemäss Fig. 3 und 4 hergestellte Bauelement besonders geeignet, weil es billig herstellbar, leicht und trotzdem genügend stabil ist.

Das Bauelement könnte aber auch als solches, d. h. als Konstruktionselement im Bauwesen, im Fahrzeugbau usw. eingesetzt werden.

Die Aufbauhilfskörper könnten auch aus einem andern Material bestehen. Wesentlich ist, dass das Material einerseits möglichst leicht und andererseits doch noch genügend fest ist, um dem beim Einfüllen des Kunstharzes in die Hohlform auf die Hilfskörper ausgeübten Druck standzuhalten. Im nach dem Aushärten des Kunstharzes fertiggestellten Bauelement haben die Aufbauhilfskörper aber keinerlei tragende Funktion mehr, sie sind ausschliesslich für die Herstellung des Bauelements erforderlich, d. h. für die richtige Anordnung der Glasfaserverstärkung. Schaumstoff ist besonders bevorzugt, weil er leicht und ausreichend druckfest ist, wobei geschlossenzelliger Schaumstoff noch den Vorteil hat, dass ein Eindringen des Kunstharzes zuverlässig vermieden wird.

Anstelle der Roving-Gewebe könnte auch eine andere Glasfaserverstärkung verwendet werden. Das Roving-Gewebe ergibt aber eine besonders stabile Kunststoff-Bewehrung, weil es aus Faserbündeln besteht, die sich in Längs- und Querrichtung über das ganz Gewebe erstrecken. Das Faservlies vermeidet die bei alleiniger Verwendung von Roving-Geweben bestehende Gefahr einer mangelnden Kunstharzbenetzung zuverlässig. Das Faservlies braucht aber nicht aus Glasfasern sondern es kann auch aus anderen Fasern bestehen, da die Stabilität der Bewehrung allein durch das Roving-Gewebe gewährleistet ist.

**Patentansprüche**

1. Bauelement mit einer von einem glasfaserverstärkten Kunststoffdeckteil (1 ; 40, 41/42) bedeckten Lage aneinandergereihter Aufbauhilfskörper (2-5 ; 26, 32, 38), das durch zwischen benachbarten Hilfskörpern (2-5 ; 26, 32, 38) angeordnete, glasfaserverstärkte Kunststoffrippen (7-9) versteift ist, die je durch eine gebogene Glasfaser-Gewebebahn (30/31, 37) gebildet sind, deren einer Endteil (12 ; 34) zwischen einen der beiden benachbarten Hilfskörper (2-5 ; 26, 32, 38) und den glasfaserverstärkten Kunststoffdeckteil (1 ; 40, 41/42) greift, dadurch gekennzeichnet, dass die Glasfaser-Gewebebahn (30/31, 37) Z-förmig gebogen ist und ihr anderer Endteil (13 ; 35) zwischen den anderen der beiden benachbarten Hilfskörper (2-5 ; 26, 32, 38) und den Boden eines glasfaserverstärkten Kunststoffschalenteils (1 ; 21/23) greift, der zusammen mit dem Kunststoffdeckteil (1 ; 40, 41/42) die Hilfskörperlage (2-5 ; 26, 32, 38) umschliesst.

2. Bauelement nach Anspruch 1, dadurch gekennzeichnet, dass die Glasfaserverstärkung der die Hilfskörperlage (2-5 ; 26, 32, 38) umschliessenden Kunststoffteile (1 ; 21/23, 41/42) und die Glasfaser-Gewebebahnen (30/31, 37) aus Roving-Gewebe (21, 30, 37, 42) bestehen.

3. Bauelement nach Anspruch 2, dadurch gekennzeichnet, dass an den Roving-Geweben (21, 30, 37, 42) Faservliese (23, 31, 41) angeordnet sind.

4. Bauelement nach einem der Ansprüche 1 bis 3, dadurch gekennzeichnet, dass die Hilfskörper (2-5 ; 26, 32, 38) wengistens annähernd quaderförmige Körper aus vorzugsweise geschlossenzelligem Schaumstoff sind.

5. Plattenförmiges Bauelement nach einem der Ansprüche 1 bis 4 für Gerüste, dadurch gekennzeichnet, dass es an seinen Ecken mit Metallbeschlägen (15) versehen ist, welche für die Montage an einem Gerüst ausgebildet (18) sind und je mit einem zwischen den Hilfskörpern (2-5 ; 26, 32, 38) und der Glasfaserverstärkung (21, 42) der diese umschliessenden Kunststoffteile (1 ; 21/23, 41/42) angeordneten Anker (17) verbunden sind.

6. Verfahren zur Herstellung des Bauelements nach Anspruch 1, wobei in einen Teil (22) einer Hohlform (22, 47) ein erstes Glasfasergewebe (21) gelegt wird, die Aufbauhilfskörper (26, 32, 38) auf dem ersten Glasfasergewebe (21) aneinandergereiht werden, und dabei zwischen zwei benachbarten Hilfskörpern (26, 32, 38) je ein zweites Glasfasergewebe (30, 37) Z-förmig verlegt wird, so dass es über den einen (26) und unter den anderen (32) der benachbarten Hilfskörper greift, die Ränder (40) des ersten Glasfasergewebes (21) entweder über der Hilfskörperlage (26, 32, 38) aufeinander gelegt oder an ein auf die Hilfskörperlage gelegtes, drittes Glasfasergewebe (42) gelegt werden, und dass in die danach geschlossene Hohlform (22, 47) Giessharz unter Evakuation der Form (22, 47) eingebracht wird.

7. Verfahren nach Anspruch 6, zur Herstellung des Bauelements nach Anspruch 3, dadurch gekennzeichnet, dass die aus Roving bestehenden Glasfasergewebe (21, 30, 37, 42) zusammen mit Faservliesen (23, 31, 41) verlegt werden, um eine vollständige Durchtränkung der Glasfasergewebe mit dem Giessharz zu gewährleisten.

8. Verfahren nach Anspruch 6 oder 7, zur Herstellung des plattenförmigen Bauelements nach Anspruch 5, dadurch gekennzeichnet, dass an den Eckbereichen (25) des einen Hohlformteils (22) zwischen das erste Glasfasergewebe (21) und die Aufbauhilfskörper (26, 38) Anker (17) eingefügt werden und an die vorzugsweise abgeschrägten Eckbereiche des aus der Hohlform (22, 47) entnommenen Elements Metallteile (15) angesetzt und mit den Ankern (17) verschraubt (16) werden.

9. Verwendung des plattenförmigen Bauelements nach Anspruch 5 als Gerüstplatte.

**Claims**

1. Structural element with a layer of adjacently disposed construction aids (2-5 ; 26, 32, 38), covered by a glass fibre reinforced synthetic plastics cover part (1 ; 40, 41/42) and which is stiffened by glass fibre reinforced synthetic plastics ribs (7-9) disposed between adjacent aids (2-5 ; 26, 32, 38) and constituted in each case by a bent sheet of glass fibre fabric (30/31, 37) of which one end part (12 ; 34) engages between one of the two adjacent aids (2-5 ; 26, 32, 38) and the glass fibre reinforced synthetic plastic cover part (1 ; 40, 40/42) characterised in that the glass fibre fabric sheet (30/31, 37) is bent Z-wise while its other end part (13 ; 35) engages between the other of the two adjacent aids (2-5 ; 26, 32, 38) and the bottom of a glass fibre reinforced synthetic plastics shell part (1 ; 21/23) which, together with the synthetic plastics cover part (1 ; 40, 41/42) encloses the layer of aids (2-5 ; 26, 32, 38).

2. Structural element according to Claim 1, characterised in that the glass fibre reinforcement of the synthetic plastics parts (1 ; 21/23, 41/42) which enclose the layer of aids (2-5 ; 26, 32, 38) and the glass fibre fabric sheets (30/31, 37) consist of roving fabric (21, 30, 37, 42).

3. Structural element according to Claim 2, characterised in that fibre fleeces (23, 31, 41) are disposed on the roving fabrics (21, 30, 37, 42).

4. Structural element according to one of Claims 1 to 3, characterised in that the aids (2-5 ; 26, 32, 38) are at least approximately parallelepiped members of preferably closed-cell foamed material.

5. Panel-shaped structural element according to one of Claims 1 to 4 for scaffolds and framing, characterised in that it is provided at its corners with metal fittings (15) constructed for assembly on a scaffolding or framework (18) and each of which is connected to an anchoring member (17) disposed between the aids (2-5 ; 26, 32, 38) and the glass fibre reinforcement (21, 42) of the synthetic plastics parts (1 ; 21/23, 41/42) enclosing the latter.

6. A method of producing this structural element according to Claim 1, in which a first glass fibre fabric (21) is placed in part (22) of a hollow mould (22, 47), the structural aid (26, 32, 38) being arranged in an adjacent disposition on the first glass fibre fabric (21), a second glass fibre fabric (30, 37) being laid Z-wise between every two adjacent aids (26, 32, 38) so that it engages over one (26) and under the other (32) of the adjacent aids, the edges (40) of the first glass fibre fabric (21) being laid on one another either over the layer of aids (26, 32, 38) or on a third glass fibre fabric (42) laid on the layer of aids, and in that casting resin is incorporated into the subsequently closed hollow mould (22, 47), during which process the mould (22, 47) is evacuated.

7. A method according to Claim 6, for producing the structural element according to Claim 3, characterised in that the glass fibre fabrics (21, 30, 37, 42) which consist of roving are laid together with the fibre fleeces (23, 31, 41) in order to guarantee that the glass fibre fabrics are completely impregnated by the casting resin.

8. A method according to Claim 6 or 7 for producing the panel-shaped structural element according to Claim 5, characterised in that at the corner zones (25) of one hollow mold part (22), anchor members (17) are inserted between the first glass fibre fabric (21) and the aids (26, 38) and in that metal parts (15) are applied to the preferably chamfered corner zones of the element withdrawn from the hollow mould (22, 47) and are bolted (at 16) together with the anchor members (17).

9. Use of the panel-shaped structural element according to Claim 5 as a framing or scaffolding panel.

**Revendications**

1. Elément de construction présentant une couche de corps structurels auxiliaires (2-5 ; 26, 32, 38) alignés en juxtaposition, recouverte par une partie de recouvrement (1 ; 40, 41/42) en matière plastique renforcée par des fibres de verre et rigidifiée par des nervures en matière plastique (7-9) renforcées par des fibres de verre et interposées entre des corps auxiliaires voisins (2-5 ; 26, 32, 38) lesdites nervures étant à chaque fois formées par une nappe tissée coudée (30/31, 37) en fibres de verre, dont l'une (12 ; 34) des parties extrêmes s'engage entre l'un des deux corps auxiliaires voisins (2-5 ; 26, 32, 38) et la partie de recouvrement (1 ; 40, 41/42) en matière plastique renforcée par des fibres de verre, caractérisé par le fait que la nappe tissée (30/31, 37) en fibres de verre est coudée en forme de Z et son autre partie extrême (13 ; 35) s'engage entre l'autre des deux corps auxiliaires voisins (2-5 ; 26, 32, 38) et le fond d'une partie d'enveloppement (1 ; 21/23) en matière plastique renforcée par des fibres de verre, qui entoure la couche de corps auxiliaires (2-5 ; 26, 32, 38) conjointement à la partie de recouvrement (1 ; 40, 41/42) en matière plastique.

2. Elément de construction selon la revendication 1, caractérisé par le fait que le renfort en fibres de verre des parties en matière plastique (1 ; 21/23, 41/42) entourant la couche de corps auxiliaires (2-5 ; 26, 32, 38), ainsi que les nappes tissées (30/31, 37) en fibres de verre, consistent en un tissu stratifil (21, 30, 37, 42).

3. Elément de construction selon la revendication 2, caractérisé par le fait que des cardes de fibres (23, 31, 41) sont disposées sur les tissus stratifils (21, 30, 37, 42).

4. Elément de construction selon l'une des revendications 1 à 3, caractérisé par le fait que les corps auxiliaires (2-5 ; 26, 32, 38) sont des corps au moins approximativement quadrangulaires consistant, de préférence, en une mousse à pores fermés.

5. Elément de construction en forme de plaque selon l'une des revendications 1 à 4, destiné à des échafaudages, caractérisé par le fait qu'il est pourvu, dans ses coins, d'armatures métalliques (15) qui sont conçues (18) pour le montage sur une carcasse, et sont respectivement reliées à une ancre (17) intercalée entre les corps auxiliaires (2-5 ; 26, 32, 38) et le renfort en fibres de verre (21, 42) des parties en matière plastique (1 ; 21/23, 41/42) entourant lesdits corps.

6. Procédé de fabrication de l'élément de construction selon la revendication 1, dans lequel un premier tissu (21) de fibres de verre est placé dans une partie (22) d'un moule creux (22, 47) ; les corps structurels auxiliaires (26, 32, 38) sont alignés en juxtaposition sur le premier tissu (21) de fibres de verre, un deuxième tissu respectif (30, 37) de fibres de verre étant agencé en forme de Z entre deux corps auxiliaires voisins (26, 32, 38), de telle sorte qu'il passe au-dessus de l'un (26) et au-dessous de l'autre (32) des corps auxiliaires voisins ; les bords (40) du premier tissu (21) de fibres de verre sont soit superposés au-dessus de la couche de corps auxiliaires (26, 32, 38), soit appliqués sur un troisième tissu (42) de fibres de verre déposé sur la couche de corps auxiliaires ; et une résine coulée est déversée dans le moule creux (22, 47) qui est ensuite fermé, en créant le vide dans ce moule (22, 47).

7. Procédé selon la revendication 6 pour fabriquer l'élément de construction selon la revendication 3, caractérisé par le fait que les tissus (21, 30, 37, 42) de fibres de verre constitués par un stratifil sont mêlés à des cardes de fibres (23, 31, 41), de façon à garantir une imprégnation totale des tissus de fibres de verre par la résine coulée.

8. Procédé selon la revendication 6 ou 7 pour fabriquer l'élément de construction en forme de plaque selon la revendication 5, caractérisé par le fait que des ancres (17) sont incorporées dans les zones d'angle (25) de l'une (22) des parties du moule creux, entre le premier tissu (21) de fibres de verre et les corps structurels auxiliaires (26, 38), des pièces métalliques (15) étant installées dans les zones d'angle, de préférence biseautées, de l'élément prélevé du moule creux (22, 47), puis solidarisées aux ancres (17) par vissage (16).

9. Utilisation de l'élément de construction en forme de plaque selon la revendication 5, en tant que plaque d'échafaudage.

Fig. 1

Fig. 4

Fig. 2

Fig. 3a

Fig. 3b

Fig. 3c

Fig. 3d

Fig. 3e

Fig. 3f